# EUROPEAN PATENT SPECIFICATION

(11) **EP 0 295 309 B1**
(45) Date of publication and mention of the grant of the patent: **12.05.1993**
(21) Application number: 88900114.5
(22) Date of filing: 18.12.1987
(51) Int. Cl.: B23B 51/04

(54) **HOLE SAW**
LOCHSÄGE
SCIE A TROUS

(43) Date of publication of application: 21.12.1988
(73) Proprietor: Yamamoto, Hiroyuki, Osaka (JP)
(72) Inventor: ITOKAZU, Noboru, Osaka-shi, Osaka 559 (JP)
(74) Representative: Robinson, John Stuart
(86) International application number: PCT/JP87/00992
(87) International publication number: WO 88/04588

(56) References cited:
- DE-A- 2 549 731
- DE-A- 3 501 860
- DE-A- 3 541 477
- GB-A- 1 242 829
- JP-U- 5 042 391
- JP-U-61 148 607
- JP-Y- 5 016 317

## Description

This invention relates to a hole saw for cutting a hole in a material.

In particular the invention relates to a hole saw comprising a tubular part having at the rear end a shank portion, for receiving torque from a power unit, and having at the front end an annular portion and a circumferentially substantially continuous series of forwardly projecting saw teeth on the annular portion, and a coaxial drill for determining with respect to the workpiece the centre of the hole to be cut by the saw, the drill being fixed with respect to the shank portion (cf. JP-Y-50-16317).

By rotating the hole saw, a hole nearly equal to the outside diameter of the tubular part is cut in the workpiece while being guided by the guide drill. At this time, as a matter of course, the hole cut in the workpiece is circular. Therefore, when cutting a circular hole, it has been widely believed among the manufacturers in the field of this art that the shape of the tubular part of the hole saw should be circular.

However, when cutting a circular hole by a tubular body of cylindrical shape, the gap between the hole and the tubular body is extremely slight. Therefore, cutting chips pose a serious problem. For example, if the workpiece is a soft iron and when its thickness is over 10 mm, or in the case of ALC plate which generates many cutting chips, the problem becomes manifest.

To solve this chip problem, generally, it is known to form a spiral groove for removing cutting chips on the outer circumference of the tubular body. This groove is, however, generally formed by cutting, which complicates the manufacturing process of the hole saw. To discharge chips, the required depth of groove is about 1.0 to 1.5 mm or more, and to form such groove, it is necessary to form the tubular body in a thickness of about 3.0 mm. Therefore, complication of manufacturing process and increase of wall thickness cause the cost of the product to increase.

JP-A-50 42391 discloses a hole cutter for cutting holes in thin sheet metal. The hole cutter has a guide drill surrounded by a coaxial cylindrical body whose front end carries three cutting tools having different radial spacings from the axis of the hole cutter.

GB-A-1 242 829 discloses a tubular diamond drill for drilling holes in non-metallic material. In order to form a space for cutting fluid between the diamond-bearing ring and the core being formed during drilling, the inner surface of the ring is eccentric relative to its outer surface.

In accordance with the present invention, as defined in claim 1, in the hole saw particularised above, the annular portion has cylindrical parts coaxial with the drill, and at the same distance from the axis of rotation, and retreat parts having a smaller distance from the axis of rotation than the cylindrical parts, between the cylindrical parts, each cylindrical part and each retreat part having saw teeth.

This provides space allowing cutting chips to escape and smooth piercing to be achieved.

The invention will be described further, by way of example, with reference to the accompanying drawings, in which:
Figure 1 shows a partially cut-away sectional view of one of the embodiments of this invention;
Figure 2 to Figure 6 are schematic end sectional views of other embodiments showing the annular saw portion 2;
Figure 7 is a front exploded view showing a different embodiment of this invention;
Figure 8 is an essential part explanatory drawing showing a still different embodiment;
Figure 9 is a total perspective view showing still another embodiment;
Figure 10 is an explanatory drawing of other embodiment accessory to the embodiment in Figure 9; and
Figure 11 is a total perspective view showing another different embodiment.

Referring now to the drawings, some of the preferred embodiments are illustratively described below. In the following embodiments, however, the dimensions, materials, configuration and other conditions of the constituent parts mentioned herein are not intended to limit the scope of the invention and are mere explanatory examples.

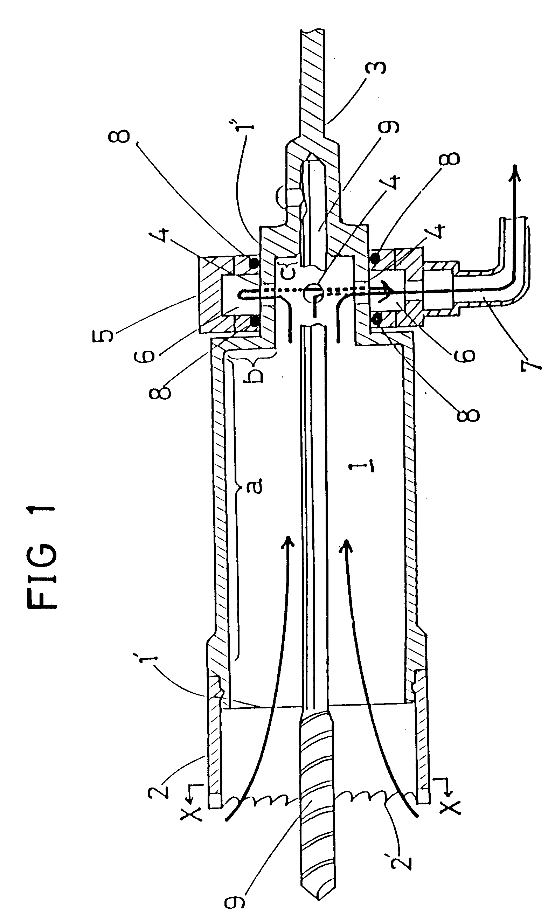

One embodiment of this invention is shown in Figure 1.

An annular saw portion 2 is provided at the front end 1' of a tubular main body 1, and its rear basal part 1'' is communicated with a shank 3. Around this basal part 1'', a hole 4 communicating from inside to outside the main body is disposed at a proper position.

In a manner to cover the hole 4 from outside, a casing 5 is provided around the surface of the basal part 1''. The casing 5 has a hollow part 6 which is opened to the side opposite to the basal part 1''. The casing 5 also has a tube 7 to communicate with an external vacuum pump (not shown). At the abutting position of the casing 5 and basal part 1'', a bearing 8 is installed to keep airtight the hollow part 6 of the casing 5. Furthermore, this bearing 8 allows the tubular main body 1 to rotate relatively to the casing 5. A guide drill 9 determines the position of piercing.

When the main body 1 is rotated by the torque which the shank 3 receives from a motor (not shown), the casing 5 remains stationary at the original position.

By the suction by the external vacuum pump, the cutting debris in the tubular main body 1 passes through the hole 4 to enter the hollow part 6, and is discharged to the outside through the tube.

The position of the hole 4 is not limited to the point indicated in the drawing, but it may be, for example, provided at positions a, b, c, etc. in Figure 1, and the casing 5 may be provided depending on its position.

The annular saw portion 2 is designed to be joined with the tubular main body 1, and it is shown to be detachable, but it is not intended to be limitative, and it may be integrally formed with the tubular main body 1. This structure is to be described in detail below. The saw teeth 2' are not limited to the illustrated type, and may be fitted in.

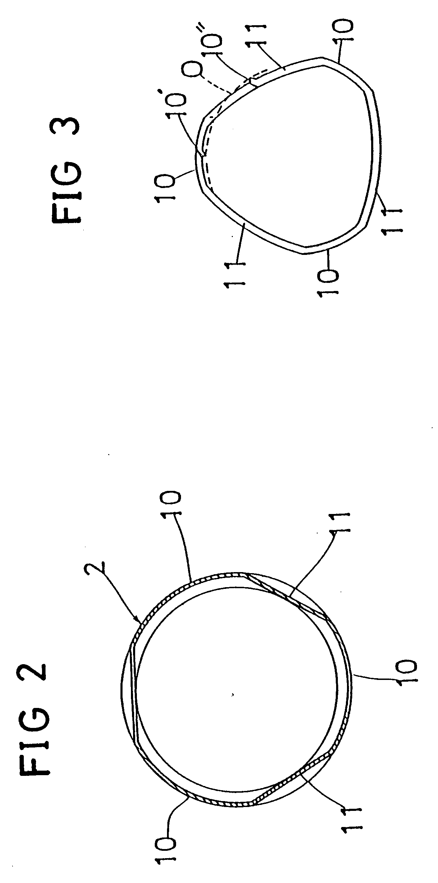

The annular saw portion 2 may be composed of, as shown in Figure 2 (end section on line X-X in Figure 1), cylindrical parts 10 and flat retreat parts 11. In particular, the cylindrical parts 10 and retreat parts 11 are disposed at three positions respectively in the illustrated example, but they may be provided at more than or less than three positions, and similar effects are expected. It is for the purpose of keeping a space for allowing the cutting chips going outside the saw portion 2 to escape that the retreat parts 11 are provided. Therefore, the retreat parts 11 may be disposed at two positions, four positions, five positions, six positions, or more.

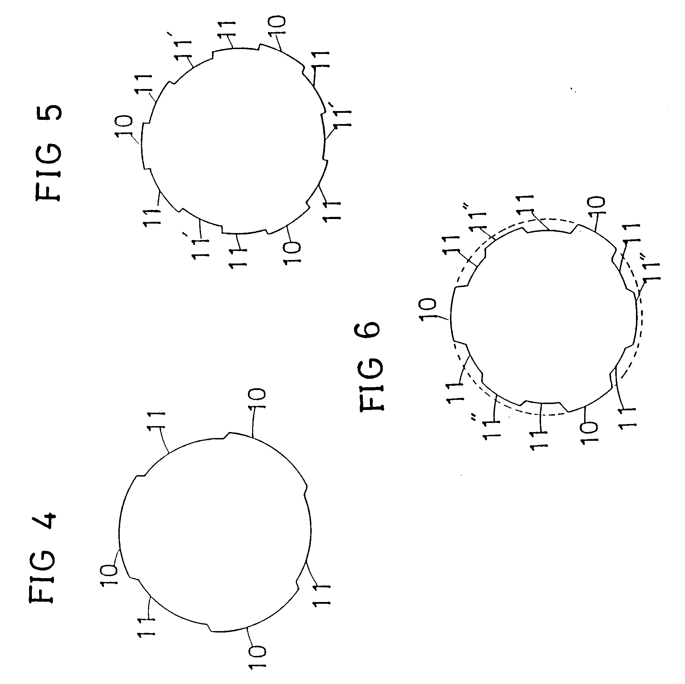

The retreat portions 11 may have a curvature as shown in Figure 3, for example. Furthermore, as shown in Figure 4, Figures 5 or Figure 6, it is possible to provide retreat parts which are cylindrical and of smaller diameter than the cylindrical parts 10, the annular saw portion 2 being stepped. In further detail, Figure 4 shows cylindrical retreat parts 11 with a circumference of a specified diameter. Figure 5 shows secondary retreat parts 11' further behind the primary retreat parts 11 (the number of secondary parts is not limited to the illustrated example). Figure 6 shows secondary retreat parts 11'' larger in diameter than the primary retreat parts 11.

A further preferable embodiment is described below while referring to Figure 3. Each saw tooth 10' disposed in a cylindrical part 10 is positioned so as to trace approximately the same track (that is, circle 0) as the saw tooth 10'' disposed at the minimum diameter poisition of each retreat part 11. In this way the load of the saw tooth at that position is lessened. Such consideration is particularly important if the workpiece is of metal. For cutting of an ordinary soft iron, a play of about 2 mm is generally required, and it is desired that the saw teeth be located on the circle having this width.

If the radius of each cylindrical part 10 is about 2 to 3 cm, the number of saw teeth is about 30. In Figure 3, only two of the teeth are shown and the other teeth are omitted from the drawing.

The saw tooth 2' is not limited to the example shown, but the tooth may be embedded or mounted.

The drawings are exaggerated so that the diameter changes of the annular saw portion 2 may be understood easily, and in execution of such embodiments, the rate of change should be set lower. For piercing of ALC, etc., however, it is possible to execute hole cutting sufficiently in the state shown in the drawings. In the embodiments shown, the direction of rotation (clockwise, counterclockwise) is not limited, but is arbitrary.

In addition to the materials mentioned above, the hole saw is expected to have sufficient effects in piercing of wood, concrete, asphalt, iron, aluminium, stainless steel, other metal and other ALC, and the material of the workpiece is not limited.

The relation between the annular saw portion and the tubular main body 1 is described in detail below.

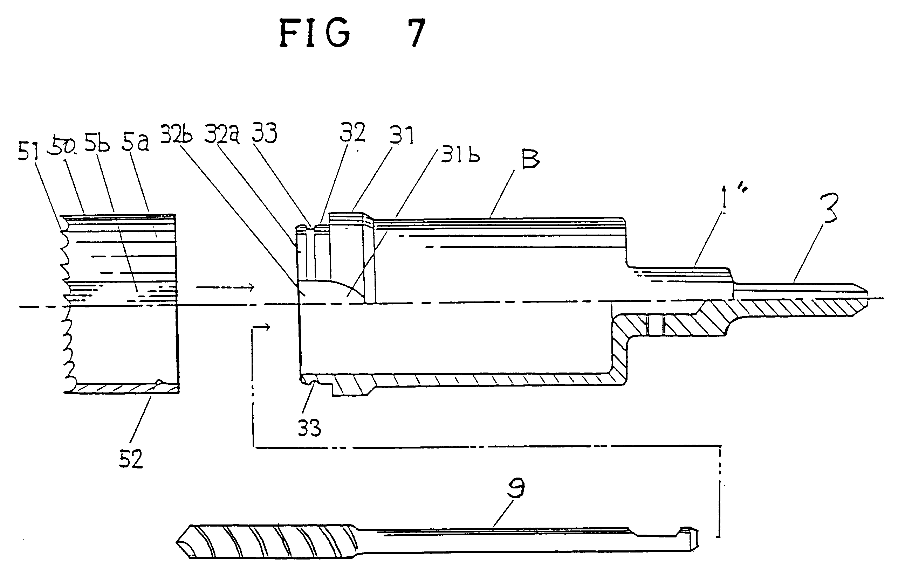

Referring first to an embodiment in which the annular saw portion can be selectively separated from the tubular main body 1, as shown in Figure 7, an end portion 50 is composed of cylindrical parts 4a and retreat parts 5b on a section orthogonal to its axial direction (the state of mounting the end portion 50 on the end insertion part 32 of the body part B is similar to that shown in Figure 1). The cylindrical parts 5a have a peripheral diameter nearly the same as that of the intended hole diameter. Each retreat part 5b is nearly linear withdrawing in the radial direction as compared with the cylindrical parts 5. This is only intended to show that the end portion 50 is formed detachably on the main body 10, and it is not to define the shape of the end portion 50.

This end portion 50 is affixed to the end of the body part B. At the end of the body part B, a flange part 31 and an insertion part 32 are formed, and the end portion 50 is inserted in the insertion part 32 at its basal part, and abuts against theflange part 31. The insertion part 31 has an outer circumferential shape corresponding to the inner circumferential shape of the end portion 50.

Furthermore, as shown in Figure 7, a detent groove 33 extending in the peripheral direction is formed in each arcuate portion 32a of the insertion part 32, while a projection 52 is formed on the inner wall of each cylindrical part 5a of the end portion 50. By fitting the projections 52 into the detent grooves 33, slip-out of the end portion 50 is prevented. However, if the fitting of the end portion 50 and the insertion part 32 is perfect, such stopping means is not necessarily needed, or it may be changed to other stopping means.

The flange part 31 possesses an outside diameter nearly equal to that of the end portion 50. The portion continuous to a retreat portion 32b of the insertion part 32 has a slope 31b obliquely cut so as to be continuous smoothly. This slope 31b is not absolutely necessary. On the contrary, the outer circumferential shape of the flange part 31 may be made identical with that of the end portion 50.

The outside diameter of the body part B is set smaller than the outside diameter of the flange part 31 so as to keep a space for receiving cutting chips against the inner wall of the hole, but both parts B and 31 may be designed with the same diameter.

The sectional shape of the body part B is free, and instead of a circle, it may be adjusted to the sectional shape of the annular saw portion, or it may be polygonal.

Thus, in this hole saw, it is possible to pierce while discharging smoothly the cutting chips from the end tubular portion, and also to detach the annular saw portion from the main body, so that this part only can be replaced.

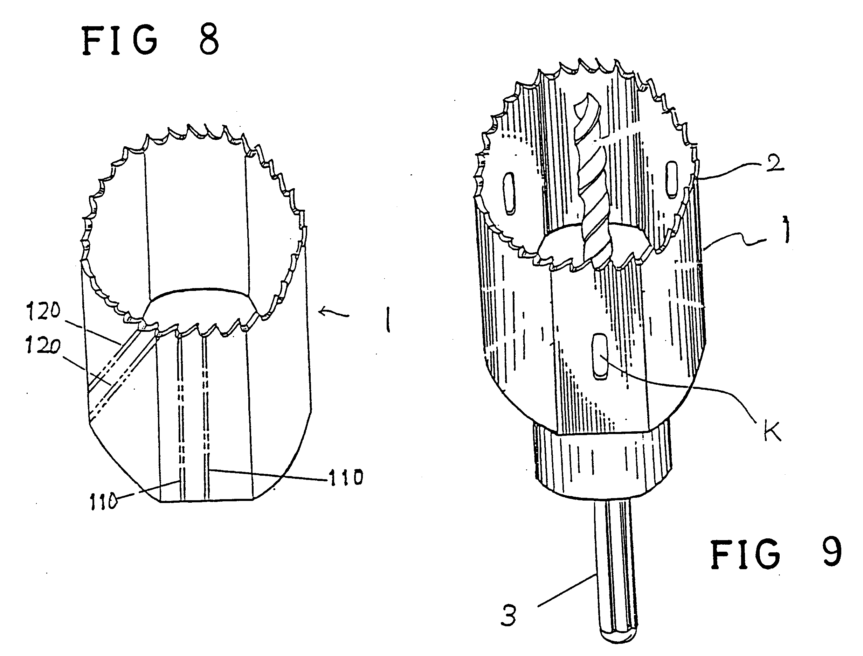

Or, as shown in Figure 9, the annular saw portion and the tubular main body 1 may be composed in one body to make up a hole saw.

Besides, as shown in Figure 8, in order to enhance the cutting chip discharge function, a longitudinal groove 110 or spiral groove 120 may be formed on the annular saw portion and/or on the surface of the main body.

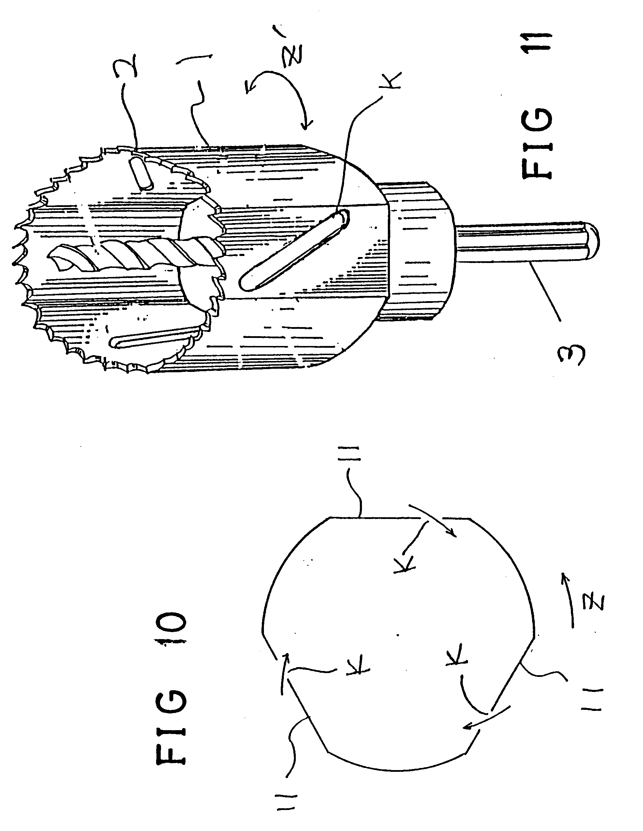

In Figure 9, a hole K at the side of the main body 1 is provided in order to allow one to scrape out the chips collected inside the main body 1 by inserting the tip of a screwdriver or the like. When this hole K is formed in the suction type hole saw, for example, as shown in Figure 1, the cutting chips outside the retreat parts 11 may be taken into the main body 1, so that it is effective to discharge. In particular, by disposing at the position shown in Figure 10, that is, at a position shifted to the rear side in the rotating direction Z from the centre of the retreat part 11, the taken-in effect of the cutting chips may be improved. Or, as shown in Figure 11, when a hole K is formed obliquely to the rotating direction Z' of the hole saw, the opening area can be wider, and the effect be greater.

## Claims (Claims for the following Contracting State(s): AT, BE, CH, LI, FR, GB, IT, LU, NL, SE)

1. A hole saw comprising a tubular part (1) having at the rear end a shank portion (3), for receiving torque from a power unit, and having at the front end an annular saw portion (2) and a circumferentially substantially continuous series of forwardly projecting saw teeth (2') on the annular portion (2), and a coaxial drill (9) for determining with respect to the workpiece the centre of the hole to be cut by the saw teeth (2'), the drill (9) being fixed with respect to the shank portion (3), characterised in that the annular portion (2) has cylindrical parts (10) coaxial with the drill (9) and at the same distance from the axis of rotation, and retreat parts (11) having a smaller distance from the axis of rotation than the cylindrical parts, between the cylindrical parts (10), each cylindrical part (10) and each retreat part (11) having a series of saw teeth (2').

2. A hole saw as claimed in claim 1, in which the annular portion (2) is detachable from the remainder of the tubular part (1).

3. A hole saw as claimed in claim 1 or 2, including a suction device (5-7) mounted on the rear end of the tubular part (1) by bearing means (8) and communicating with the interior of the tubular part (1) in order to discharge debris therefrom.

4. A hole saw as claimed in any preceding claim, in which the retreat parts (11) comprise cylindrical retreat parts coaxial with and of smaller diameter than the cylindrical parts (10).

5. A hole saw as claimed in claim 4, in which two successive cylindrical parts (10) have between them a single cylindrical retreat part (11).

6. A hole saw as claimed in claim 4, in which two successive cylindrical parts (10) have between them a pair of first cylindrical retreat parts (11) with a second cylindrical retreat part (11';11'') between them.

7. A hole saw as claimed in claim 6, in which the second cylindrical retreat part (11'') is of greater diameter than the first cylindrical retreat parts (11).

8. A hole saw as claimed in any preceding claim, in which the cylindrical parts (10) and the retreat parts (11,11',11'') are connected by steps.

## Claims (Claims for the following Contracting State(s): DE)

1. A hole saw comprising a tubular part (1) having at the rear end a shank portion (3), for receiving torque from a power unit, and having at the front end an annular saw portion (2) and a circumferentially substantially continuous series of forwardly projecting saw teeth (2') on the annular portion (2), and a coaxial drill (9) for determining with respect to the workpiece the centre of the hole to be cut by the saw teeth (2'), the drill (9) being fixed with respect to the shank portion (3), characterised in that the annular portion (2) has cylindrical parts (10) coaxial with the drill (9) and at the same distance from the axis of rotation, and cylindrical retreat parts (11) coaxial with the cylindrical parts (10) and having a smaller distance from the axis of rotation than the cylindrical parts, between the cylindrical parts (10), each cylindrical part (10) and each retreat part (11) having a series of saw teeth (2').

2. A hole saw as claimed in claim 1, in which the annular portion (2) is detachable from the remainder of the tubular part (1).

3. A hole saw as claimed in claim 1 or 2, including a suction device (5-7) mounted on the rear end of the tubular part (1) by bearing means (8) and communicating with the interior of the tubular part (1) in order to discharge debris therefrom.

4. A hole saw as claimed in any of claims 1 to 3, in which two successive cylindrical parts (10) have between them a single cylindrical retreat part (11).

5. A hole saw as claimed in any of claims 1 to 3, in which two successive cylindrical parts (10) have between them a pair of first cylindrical retreat parts (11) with a second cylindrical retreat part (11';11'') between them.

6. A hole saw as claimed in claim 5, in which the second cylindrical retreat part (11'') is of greater diameter than the first cylindrical retreat parts (11).

7. A hole saw as claimed in any preceding claim, in which the cylindrical parts (10) and the retreat parts (11,11',11'') are connected by steps.

## Patentansprüche (Patentansprüche für folgende(n) Vertragsstaat(en): AT, BE, CH, LI, FR, GB, IT, LU, NL, SE)

1. Lochsäge aus einem rohrförmigen Teil (1), der am hinteren Ende einen Schaft (3) aufweist, um das Drehmoment von einer Antriebseinheit aufzunehmen, und am vorderen Ende einen ringförmigen Sägenbereich (2) und eine über den Ümfang verteilte, im wesentlichen kontinuierliche Reihe von nach vorne überstehenden Sägezähnen (2') auf dem ringförmigen Bereich (2), und einen an dem Schaft (3) befestigten, koaxialen Bohrer (9) aufweist, wobei dieser Bohrer (9) vorgesehen ist, um auf dem Werkstück die Mitte des mit den Sägezähnen (2') auszuschneidenden Lochs zu bestimmen, dadurch gekennzeichnet, daß der ringförmige Bereich (2) zylindrische Teile (10) aufweist, die koaxial zu dem Bohrer (9) sind und in dem gleichen Abstand von der Drehachse angeordnet sind, und zwischen den zylindrischen Teilen (10) außerdem zurückgesetzte Teile (11) aufweist, die einen kleineren Abstand von der Drehachse als die zylindrischen Teile haben, wobei jeder zylindrische Teil (10) und jeder zurückgesetzte Teil (11) eine Reihe von Sägezähnen (2') aufweist.

2. Lochsäge gemäß Anspruch 1, bei der der ringförmige Bereich (2) von dem übrigen rohrförmigen Teil (1) abnehmbar ist.

3. Lochsäge gemäß Anspruch 1 oder 2, die eine Saugeinrichtung (5-7) umfaßt, die über Lagermittel (8) an dem hinteren Ende des rohrförmigen Teils (1) angebracht ist und mit dem Inneren des rohrförmigen Teils (1) in Verbindung steht, um Sägespäne daraus abzuführen.

4. Lochsäge gemäß irgendeinem der vorhergehenden Ansprüche, bei der die zurückgesetzten Teile (11) zylindrische zurückgesetzte Teile umfassen, die koaxial zu den zylindrischen Teilen (10) sind und einen kleineren Durchmesser als die zylindrischen Teile (10) haben.

5. Lochsäge gemäß Anspruch 4, bei der zwischen zwei aufeinanderfolgenden zylindrischen Teilen (10) ein einziges zylindrisches zurückgesetztes Teil (11) angeordnet ist.

6. Lochsäge gemäß Anspruch 4, bei der zwischen Zwei aufeinanderfolgenden zylindrischen Teilen (10) zwei erste zylindrische zurückgesetzte Teile (11) angeordnet sind, zwischen dienen ein zweites zylindrisches zurückgesetztes Teil (11';11'') angeordnet ist.

7. Lochsäge gemäß Anspruch 6, bei der das zweite zylindrische zurückgesetzte Teil (11'') einen größeren Durchmesser als die ersten zylindrischen zurückgesetzten Teile (11) hat.

8. Lochsäge gemäß irgendeinem der vorhergehenden Ansprüche, bei der die zylindrischen Teile (10) und die zurückgesetzten Teile (11,11',11'') durch Stufen miteinander verbunden sind.

## Patentansprüche (Patentansprüche für folgende(n) Vertragsstaat(en): DE)

1. Lochsäge aus einem rohrförmigen Teil (1), der am hinteren Ende einen Schaft (3) aufweist, um das Drehmoment von einer Antriebseinheit aufzunehmen, und am vorderen Ende einen ringförmigen Sägenbereich (2) und eine über den Umfang verteilte, im wesentlichen kontinuierliche Reihe von nach vorne überstehenden Sägezähnen (2') auf dem ringförmigen Bereich (2), und einen an dem Schaft (3) befestigten, koaxialen Bohrer (9) aufweist, wobei dieser Bohrer (9) vorgesehen ist, um auf dem Werkstück die Mitte des mit den Sägezähnen (2') auszuschneidenden Lochs zu bestimmen, dadurch gekennzeichnet, daß der ringförmige Bereich (2) zylindrische Teile (10) aufweist, die koaxial zu dem Bohrer (9) sind und in dem gleichen Abstand von der Drehachse angeordnet sind, und zwischen den zylindrischen Teilen (10) zylindrische zurückgesetzte Teile (11) aufweist, die koaxial zu den zylindrischen Teilen (10) sind und einen kleineren Abstand von der Drehachse als die zylindrischen Teile (10) haben, wobei jeder zylindrische Teil (10) und jeder zurückgesetzte Teil (11) eine Reihe von Sägezähnen (2') aufweist.

2. Lochsäge gemäß Anspruch 1, bei der der ringförmige Bereich (2) von dem übrigen rohrförmigen Teil (1) abnehmbar ist.

3. Lochsäge gemäß Anspruch 1 oder 2, die eine Saugeinrichtung (5-7) umfaßt, die über Lagermittel (8) an dem hinteren Ende des rohrförmigen Teils (1) angebracht ist und mit dem Inneren des rohrförmigen Teils (1) in Verbindung steht, um Sägespäne daraus abzuführen.

4. Lochsäge gemäß irgendeinem der Ansprüche 1 bis 3, bei der zwischen zwei aufeinanderfolgenden zylindrischen Teilen (10) ein einziges zylindrisches zurückgesetztes Teil (11) angeordnet ist.

5. Lochsäge gemäß irgendeinem der Ansprüche 1 bis 3, bei der zwischen zwei aufeinanderfolgenden zylindrischen Teilen (10) zwei erste zylindrische zurückgesetzte Teile (11) angeordnet sind, zwischen dienen ein zweites zylindrisches zurückgesetztes Teil (11';11'') angeordnet ist.

6. Lochsäge gemäß Anspruch 5, bei der das zweite zylindrische zurückgesetzte Teil (11'') einen größeren Durchmesser als die ersten zylindrischen zurückgesetzten Teile (11) hat.

7. Lochsäge gemäß irgendeinem der vorhergehenden Ansprüche, bei der die zylindrischen Teile (10) und die zurückgesetzten Teile (11,11',11'') durch Stufen miteinander verbunden sind.

## Revendications (Revendications pour l'(les) Etat(s) contractant(s) suivant(s): AT, BE, CH, LI, FR, GB, IT, LU, NL, SE)

1. Scie à trou comprenant une partie tubulaire (1) possédant, à l'extrémité arrière, une portion de tige (3) pour recevoir le couple provenant d'une alimentation en énergie et possédant, à l'extrémité avant, une portion annulaire de scie (2) et une série continue essentiellement circonférentielle de dents de scie (2') faisant saillie vers l'avant sur la portion annulaire (2), ainsi qu'un foret coaxial (9) pour déterminer, par rapport à la pièce à usiner, le centre du trou à découper par les dents de scie (2'), le foret (9) étant fixe par rapport à la portion de tige (3), caractérisée en ce que la portion annulaire (2) possède des parties cylindriques (10) coaxiales au foret (9) et à la même distance par rapport à l'axe de rotation, ainsi que des parties en retrait (11) dont la distance par rapport à l'axe de rotation est plus courte que celle des parties cylindriques, entre les parties cylindriques (10), chaque partie cylindrique (10) et chaque partie en retrait (11) possédant une série de dents de scie (2').

2. Scie à trou selon la revendication 1, dans laquelle la portion annulaire (2) peut se détacher du reste de la partie tubulaire (1).

3. Scie à trou selon la revendication 1 ou 2, englobant un dispositif d'aspiration (5-7) monté sur l'extrémité arrière de la partie tubulaire (1) à l'intervention d'un moyen de support (8) et communiquant avec l'intérieur de la partie tubulaire (1) afin d'en évacuer les débris.

4. Scie à trou selon l'une quelconque des revendications précédentes, dans laquelle les parties en retrait (11) comprennent des parties cylindriques en retrait coaxiales aux parties cylindriques (10) et dont le diamètre est inférieur à celui de ces dernières.

5. Scie à trou selon la revendication 4, dans laquelle deux parties cylindriques successives (10) comportent, entre elles, une seule partie cylindrique en retrait (11).

6. Scie à trou selon la revendication 4, dans laquelle deux parties cylindriques successives (10) comportent, entre elles, une paire de premières parties cylindriques en retrait (11), une seconde partie cylindrique en retrait (11', 11'') étant disposée entre ces dernières.

7. Scie à trou selon la revendication 6, dans laquelle la seconde partie cylindrique en retrait (11'') possède un diamètre supérieur à celui des premières parties cylindriques en retrait (11).

8. Scie à trou selon l'une quelconque des revendications précédentes, dans laquelle les parties cylindriques (10) et les parties en retrait (11, 11', 11'') sont reliées de manière échelonnée.

## Revendications (Revendications pour l'(les) Etat(s) contractant(s) suivant(s): DE)

1. Scie à trou comprenant une partie tubulaire (1) possédant, à l'extrémité arrière, une portion de tige (3) pour recevoir le couple provenant d'une alimentation en énergie et possédant, à l'extrémité avant, une portion annulaire de scie (2) et une série continue essentiellement circonférentielle de dents de scie (2') faisant saillie vers l'avant sur la portion annulaire (2), ainsi qu'un foret coaxial (9) pour déterminer, par rapport à la pièce à usiner, le centre du trou à découper par les dents de scie (2'), le foret (9) étant fixe par rapport à la portion de tige (3), caractérisée en ce que la portion annulaire (2) possède des parties cylindriques (10) coaxiales au foret (9) et à la même distance par rapport à l'axe de rotation, ainsi que des parties cylindriques en retrait (11) coaxiales aux parties cylindriques (10) et dont la distance par rapport à l'axe de rotation est plus courte que celle des parties cylindriques, entre les parties cylindriques (10), chaque partie cylindrique (10) et chaque partie en retrait (11) possédant une série de dents de scie (2').

2. Scie à trou selon la revendication 1, dans laquelle la portion annulaire (2) peut se détacher du reste de la partie tubulaire (1).

3. Scie à trou selon la revendication 1 ou 2, englobant un dispositif d'aspiration (5-7) monté sur l'extrémité arrière de la partie tubulaire (1) à l'intervention d'un moyen de support (8) et communiquant avec l'intérieur de l'élément tubulaire (1) afin d'en évacuer les débris.

4. Scie à trou selon l'une quelconque des revendications 1 à 3, dans laquelle deux parties cylindriques successives (10) comportent, entre elles, une seule partie cylindrique en retrait (11).

5. Scie à trou selon l'une quelconque des revendications 1 à 3, dans laquelle deux parties cylindriques successives (10) comportent, entre elles, une paire de premières parties cylindriques en retrait (11), une seconde partie cylindrique en retrait (11', 11'') étant disposée entre ces dernières.

6. Scie à trou selon la revendication 5, dans laquelle la seconde partie cylindrique en retrait (11'') possède un diamètre supérieur à celui des premières parties cylindriques en retrait (11).

7. Scie à trou selon l'une quelconque des revendications précédentes, dans laquelle les parties cylindriques (10) et les parties en retrait (11, 11', 11'') sont reliées de manière échelonnée.
